# EUROPÄISCHE PATENTANMELDUNG

(11) **EP 3 778 255 A2**
(43) Veröffentlichungstag der Anmeldung: **17.02.2021**
(21) Anmeldenummer: 20189754.3
(22) Anmeldetag: 06.08.2020
(51) Int. Cl.: B42D 25/328, G03H 1/02, G07D 7/12, G06K 19/06, B42D 25/305, G06K 19/14, G06K 19/16, G07D 7/00, G07D 7/0043, G07D 7/121, G03H 1/00

(54) **WERT- ODER SICHERHEITSPRODUKT, VERFAHREN ZU DESSEN HERSTELLUNG UND VORRICHTUNG ZUR REKONSTRUKTION UND ERFASSUNG EINES REFLEXIONSHOLOGRAMMS EINES SOLCHEN**

(30) Priorität: 13.08.2019 DE 102019121821
(71) Anmelder: Bundesdruckerei GmbH, 10969 Berlin (DE)
(72) Erfinder: Grieser, Ralf, 10589 Berlin (DE); Gahlbeck, Jeffry, 15517 Fürstenwalde (DE); Knebel, Michael, 13086 Berlin (DE)
(74) Vertreter: Hentrich Patentanwälte PartG mbB

(57) **Zusammenfassung**

Die Erfindung betrifft ein Wert- oder Sicherheitsprodukt (100), mit einem Grundkörper auf den ein Reflexionshologramm (500) aufgebracht oder in den das Reflexionshologramm eingebracht ist. Das maschinenlesbare Reflexionshologramm (500) ist ausgebildet, ausschließlich bei einer Rekonstruktionswellenlänge oder bei einem Rekonstruktionswellenlängenbereich zu rekonstruieren, die aus dem Spektrum des für das menschliche Auge nicht-sichtbaren Lichts ausgewählt sind, z.B. Infrarot (IR), Nahinfrarot (NIR) oder Ultraviolett (UV). Die Erfindung betrifft außerdem ein Verfahren zur Herstellung des Wert- oder Sicherheitsprodukts (100) sowie eine Vorrichtung (200) zur Rekonstruktion und Erfassung des Reflexionshologramms (500) des Wert- oder Sicherheitsprodukts (100).

## Beschreibung

Die vorliegende Erfindung betrifft ein Wert- oder Sicherheitsprodukt, insbesondere eine Identitätskarte, ein Verfahren zu dessen Herstellung sowie eine Vorrichtung zur Rekonstruktion und Erfassung eines Reflexionshologramms eines Wert- oder Sicherheitsprodukts. Derartige Wert- oder Sicherheitsdokumente können beispielsweise ein Personaldokument, eine Scheckkarte, ein nicht personalisierter Berechtigungsausweis, wie eine Fahrkarte oder ein Zahlungsmittel, oder ein für die Produktsicherung bestimmtes Wert- oder Sicherheitselement, sein.

Wert- oder Sicherheitsprodukte, insbesondere Wert- oder Sicherheitsdokumente, dienen dazu, die Identität einer Person oder Sache oder einen Anspruch, beispielsweise auf Zahlung eines Geldbetrages oder auf Herausgabe eines Produktes oder Erbringung einer Dienstleistung, zu verifizieren. Hierzu ist sicherzustellen, dass das Produkt nicht oder nur mit erheblichem Aufwand imitiert, gefälscht oder verfälscht werden kann. Das Produkt enthält daher Sicherheitsmerkmale, deren Nachahmung äußerst schwierig oder sogar praktisch unmöglich ist. Beispielsweise besteht das Produkt, wie Banknoten, aus einem nicht ohne weiteres verfügbaren Material. Zusätzlich oder alternativ können Sicherheitsmerkmale durch spezielle Farben, beispielsweise lumineszierende oder optisch variable Farben, optische Elemente, wie Kippbilder, Kinegramme, Linsen- oder Prismenarrays, ferner Guillochen, Melierfasern, Sicherheitsfäden und andere gebildet sein. Des Weiteren ist es auch erforderlich, dass die Wert- oder Sicherheitsdokumente einfach herstellbar sind und dass sie von sehbehinderten Personen erfasst werden können.

Obwohl viele zur Anwendung kommende Sicherheitsmerkmale existieren, sind noch immer viele Fälschungen von Wert- oder Sicherheitsprodukten erfolgreich.

Es ist daher die Aufgabe der vorliegenden Erfindung, ein Wert- oder Sicherheitsprodukt, ein Verfahren zu dessen Herstellung sowie eine Vorrichtung zur Rekonstruktion und Erfassung eines Reflexionshologramms eines Wert- oder Sicherheitsprodukts anzugeben, die dem vorstehend erwähnten Nachteil Rechnung tragen.

Die vorstehenden Aufgaben werden mit einem Wert- oder Sicherheitsprodukt mit dem Merkmalsbestand des Anspruchs 1, mit einem Verfahren mit dem Merkmalsbestand des Anspruchs 10 sowie mit einer Vorrichtung mit den Merkmalen des Anspruchs 15 gelöst. Vorteilhafte Ausgestaltungen mit zweckmäßigen Weiterbildungen der Erfindung sind in den abhängigen Ansprüchen angegeben.

Das Wert- oder Sicherheitsprodukt weist insbesondere einen Grundkörper auf, auf den ein Reflexionshologramm aufgebracht oder in den das Reflexionshologramm eingebracht ist. Das Reflexionshologramm ist dabei maschinenlesbar und ausgebildet, ausschließlich bei einer Rekonstruktionswellenlänge oder bei einem Rekonstruktionswellenlängenbereich zu rekonstruieren, die aus dem Spektrum des für das menschliche Auge nicht-sichtbaren Lichts ausgewählt sind.

Durch diese Ausgestaltung ist es möglich, ein sogenanntes "Level-2"-Sicherheitsmerkmal in Form des Reflexionshologramms in das Wert- oder Sicherheitsprodukt einzubringen oder daran anzubringen, welches nur mit technischen Hilfsmitteln - und damit nicht von einem Menschen - überprüfbar ist. Dies bietet einen für Menschen unsichtbaren, robusten Schutz vor Fälschungen, bei gleichzeitig einfacher Auslesbarkeit mittels geeigneter Lesegeräte.

Das Wert- oder Sicherheitsprodukt kann ein Wert- oder Sicherheitsdokument oder ein Sicherheitselement sein, d.h. ein Element, das beispielsweise mit einem gegen Nachahmung, Fälschung oder Verfälschung zu schützenden Gegenstand verbunden wird, beispielsweise ein Aufkleber, Etikett oder dergleichen. Als Wert- oder Sicherheitsprodukt kommen beispielsweise ein Reisepass, ein Personalausweis, ein Führerschein oder eine andere ID-Karte oder ein Zugangskontrollausweis, ein Fahrzeugschein, ein Fahrzeugbrief, ein Visum, ein Scheck, sonstige Zahlungsmittel, insbesondere eine Banknote, eine Scheck-, eine Bank-, oder eine Kredit- oder Barzahlungskarte, eine Kundenkarte, eine Gesundheitskarte, eine Chipkarte, ein Firmenausweis, ein Berechtigungsnachweis, ein Mitgliedsausweis oder ein anderes ID-Dokument infrage.

Vorzugsweise liegt das Wert- oder Sicherheitsprodukt in ID 1-, ID 2-, ID 3- oder in irgendeinem anderen Format vor, beispielsweise in Heftform, wie bei einem passähnlichen Gegenstand. Das Wert- oder Sicherheitsprodukt ist im Allgemeinen ein Laminat aus mehreren Dokumentenlagen, die passgenau unter Wärmeeinwirkung und unter erhöhtem Druck flächig miteinander verbunden sind. Diese Produkte sollen den normierten Anforderungen genügen, beispielsweise ISO 10373, ISO/IEC 7810, ISO 14443.

Vorzugsweise bestehen die Produktlagen aus einem Trägermaterial, das sich für eine Lamination eignet. Das Wert- oder Sicherheitsprodukt kann aber vorzugsweise aus einem Polymer gebildet sein, das ausgewählt ist aus einer Gruppe, umfassend Polycarbonat (PC), insbesondere Bisphenol A-Polycarbonat oder ein Polycarbonat, gebildet mit einem geminal disubstituierten Bis-(hydroxyphenyl)-cycloalkan, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate, und/oder Papier und/oder Pappe und/oder Glas und/oder Metall und/oder Keramik. Außerdem kann das Produkt auch aus mehreren dieser Materialien hergestellt sein. Bevorzugt besteht es aus PC oder PC/TPU/PC. Die Polymere können entweder gefüllt oder ungefüllt vorliegen. Im letzteren Falle sind sie vorzugsweise transparent oder transluzent. Falls die Polymere gefüllt sind, sind sie opak. Die vorstehenden Angaben beziehen sich sowohl auf miteinander zu verbindende Folien als auch auf Flüssigformulierungen, die auf ein Vorprodukt aufgebracht werden, wie einen Schutz- oder Decklack. Bevorzugt wird das Produkt aus drei bis zwölf, vorzugsweise vier bis zehn Folien, hergestellt. Die Folien können ferner Druckschichten tragen. Ein solcherart gebildetes Laminat kann abschließend ein- oder beidseitig mit dem Schutz- oder Decklack oder mit einer Folie überzogen werden. Die Folie kann insbesondere eine Kratzschutzfolie sein. Derart gebildete Overlaylagen schützen ein darunter angeordnetes Sicherheitsmerkmal und/oder verleihen dem Dokument die erforderliche Abriebfestigkeit.

Bei dem Reflexionshologramm handelt es sich typischerweise um ein Volumenreflexionshologramm, insbesondere ein Denisjuk-Hologramm, welches nur bei einer oder bei mehreren Wellenlängen des für das menschliche Auge nicht-sichtbaren Lichts rekonstruiert.

Zur Herstellung eines solchen Reflexionshologramms wird ein holografischer Film in unmittelbare Nähe oder in Kontakt mit einem Master gebracht, wobei im Master beugende Strukturen ausgebildet sind, die in den holografischen Film "übertragen" werden sollen. Wird kohärentes - für das menschliche Auge nicht sichtbares - Licht durch den holografischen Film in den Master geleitet, so wird es im Master gebeugt und in den holografischen Film zurückgestrahlt. Dort interferiert dieses mit dem kohärenten Licht, welches zur Beleuchtung des Masters verwendet wird, womit sich im holografischen Film eine Interferenzstruktur ausbildet, welche durch das an dem Master gebeugte Licht festgelegt ist. Bei der nachfolgenden Entwicklung des belichteten holografischen Films wird das Reflexionshologramm fixiert. Um es zu rekonstruieren muss das dann eingestrahlte Licht eine geeignete Rekonstruktionswellenlänge oder geeignete Rekonstruktionswellenlängen aufweisen sowie eine geeignete Einstrahlrichtung oder geeignete Einstrahlrichtungen, so dass eine Beugung an der Beugungsstruktur in der gewünschten Weise erfolgt.

Besonders fälschungssicher ist das Wert- oder Sicherheitsprodukt, wenn das Reflexionshologramm ausgebildet ist, bei Wellenlängen oder in einem Wellenlängenbereich des Infrarots zu rekonstruieren. Besonders bevorzugt ist es, wenn das Reflexionshologramm ausgebildet ist, bei Wellenlängen oder in einem Wellenlängenbereich des Nahinfrarots zu rekonstruieren, mithin also in einem Wellenlängenbereich von 780 Nanometern bis zu 3000 Nanometern.

Zur Erzeugung und/oder zur Rekonstruktion kann beispielsweise ein optisch gepumpter Halbleiterlaser Verwendung finden, welcher ausgebildet ist, im Dauerstrich (CW-Laser, englisch für "continuous-wave-laser") Lichtwellen mit einer konstanten Intensität, beispielsweise mit einer Wellenlänge des Infrarot von zwischen 600 Nanometern und 3000 Nanometern, vorzugsweise zwischen 800 Nanometern und 1050 Nanometern zu emittieren. Bei zylindrischem Querschnitt des Lasers hat die Strahlintensität ein Gauß-Profil; diese Mode wird als TEMoo-Mode bezeichnet.

Eine einfache Rekonstruktion des Reflexionshologramms ist außerdem möglich, wenn das Reflexionshologramm ausgebildet ist, bei Wellenlängen oder in einem Wellenlängenbereich des Ultravioletts, insbesondere des nahen Ultravioletts zu rekonstruieren. Hierbei erfolgt die Belichtung des holografischen Films dann ebenfalls mittels eines gepumpten Halbleiterlasers, der ausgebildet ist, im Dauerstrich betrieben zu werden. Vorzugsweise werden hierfür Wellenlängen von zwischen 300 Nanometern bis 600 Nanometern, vorzugsweise ungefähr 355 Nanometern verwendet. Mit Schwarzlicht kann auf einfache Weise eine Rekonstruktion des Reflexionshologramms erzeugt werden.

Das Wert- oder Sicherheitsprodukt weist einen noch besseren Schutz vor Fälschungen auf, wenn das maschinenlesbare Reflexionshologramm kodiert ist. Hierbei kommt der Einsatz eines DataMatrix-Codes in Betracht, da sich dieser als maschinenlesbarer zweidimensionaler Barcode hinreichend bewährt hat.

Es hat sich als vorteilhaft erwiesen, wenn das Reflexionshologramm auf einem für das menschliche Auge sichtbaren Hologramm des Wert- oder Sicherheitsprodukts platziert oder darin integriert ist. Mit anderen Worten lässt sich dann das für das menschliche Auge nicht sichtbare Reflexionshologramm im sichtbaren Hologramm "verstecken" und erst mittels eines geeigneten Lesegerätes erfassen.

Die in Verbindung mit dem erfindungsgemäßen Wert- oder Sicherheitsprodukt genannten Vorteile und bevorzugten Ausführungsformen gelten auch für das erfindungsgemäße Verfahren zur Herstellung eines Wert- oder Sicherheitsprodukts. Es umfasst insbesondere die folgenden Schritte:
A) Belichten eines holografischen Films durch Bestrahlen mit kohärentem Licht, dessen Wellenlänge oder dessen Wellenlängenbereich ausgewählt ist aus dem Spektrum des für das menschliche Auge nicht-sichtbaren Lichts und Erzeugen eines maschinenlesbaren Reflexionshologramms,
B) Entwickeln des holografischen Films zur Fixierung des Reflexionshologramms, und
C) Aufbringen oder Einbringen eines das Reflexionshologramm umfassenden Abschnitts des holografischen Films auf eine oder in eine Schicht oder auf ein oder in ein Trägermaterial eines Rohlings eines Wert- oder Sicherheitsprodukts oder in ein im Wert- oder Sicherheitsprodukt ausgebildetes Fenster.

Durch dieses Verfahren wird ein Wert- oder Sicherheitsprodukt bereitgestellt welches ein Reflexionshologramm aufweist, das einen für Menschen unsichtbaren, robusten Schutz vor Fälschungen, bei gleichzeitig einfacher Auslesbarkeit mittels geeigneter Lesegeräte bietet. Das Reflexionshologramm kann in einer Ausgestaltung in den Aufbau der Karte integriert sein, wobei es eine Art "Fenster" im Kartenaufbau ausbildet. Diejenigen Schichten, die um die Schicht mit dem Reflexionshologramm angeordnet sind, sind dann jeweils mit einer entsprechenden Ausnehmung versehen, so dass die Auswertung, insbesondere also die Rekonstruktion des Reflexionshologramms möglich bleibt.

Auch hier ist von Vorteil, wenn das maschinenlesbare Reflexionshologramm beim Belichten einen Code, insbesondere einen DataMatrix-Code ausbildet, der zusätzlichen Schutz vor Fälschungen bereitstellt. Beispielsweise kann in dem Reflexionshologramm eine Information verborgen sein, die einer auf dem Wert- oder Sicherheitsprodukt ebenfalls vorhandenen Referenzinformation entspricht. Ein Abgleich der im Reflexionshologramm hinterlegten Information mit der Referenzinformation lässt schnell auf eine Manipulation oder auf eine Fälschung des Wert- oder Sicherheitsprodukts schließen.

Es hat sich als vorteilhaft erwiesen, wenn die Belichtung des holografischen Films mittels Nahinfrarot-Lichts erfolgt, so dass das Reflexionshologramm bei Wellenlängen oder in einem Wellenlängenbereich des Nahinfrarots rekonstruiert. Dies bietet die Möglichkeit der einfachen Auswertbarkeit mittels IR-Lesegeräten.

Es ist für eine verbesserte Absicherung des Wert- oder Sicherheitsprodukts von Vorteil, wenn das kodierte Reflexionshologramm im Schritt C) in ein für das menschliche Auge sichtbares Hologramm integriert wird. Auf diese Weise kann eine doppelte Verifikation der Echtheit des Wert- oder Sicherheitsprodukt erfolgen, nämlich durch eine erste Überprüfung des sichtbaren Hologramms und durch eine zweite Überprüfung des nicht-sichtbaren, kodierten Reflexionshologramm.

Ferner liegt eine verbesserte Absicherung des Wert- oder Sicherheitsprodukts vor, wenn das kodierte Reflexionshologramm im Schritt C) in ein Portraitbild des Wert- oder Sicherheitsprodukt eingebettet wird.

Die in Verbindung mit dem erfindungsgemäßen Wert- oder Sicherheitsprodukt genannten Vorteile und bevorzugten Ausführungsformen gelten auch für die erfindungsgemäße Vorrichtung zur Rekonstruktion und Erfassung eines Reflexionshologramms eines Wert- oder Sicherheitsprodukts. Sie umfasst insbesondere:
- eine Halterung, die ausgebildet ist, das Wert- oder Sicherheitsprodukt aufzunehmen,
- eine Lichtquelle, die Licht zumindest mit einer Rekonstruktionswellenlänge oder aus einem Rekonstruktionswellenbereich emittiert, die aus dem Spektrum des für das menschliche Auge nicht-sichtbaren Lichts ausgewählt sind, wobei die Lichtquelle ausgebildet ist, das in der Halterung befindliche Wert- oder Sicherheitsprodukt aus einer ersten Richtung zu beleuchten, und
- einen für Licht mit der Rekonstruktionswellenlänge oder aus dem Rekonstruktionswellenbereich sensitiven Bildsensor, der ausgestaltet ist, vom Reflexionshologramm reflektiertes Licht aus einer zweiten Richtung zu erfassen.

Mit dieser Vorrichtung lässt sich auf einfache und betriebssichere Weise die Echtheit eines Wert- oder Sicherheitsprodukts verifizieren.

Die vorliegende Erfindung wird nachfolgend anhand von Figuren näher erläutert, wobei die dargestellten Beispiele lediglich exemplarischen Charakter haben und keine Einschränkung hinsichtlich der Tragweite der beschriebenen Erfindung darstellen. Es zeigen im Einzelnen:
- Fig. 1: eine schematische isometrische Darstellung eines Wert- oder Sicherheitsprodukts in Form einer Identitätskarte;
- Fig. 2: eine schematische Schnittansicht der Identitätskarte entlang der Linie I-I; und
- Fig. 3: eine schematische Darstellung einer Vorrichtung zur Rekonstruktion und Erfassung eines Wert- oder Sicherheitsprodukts.

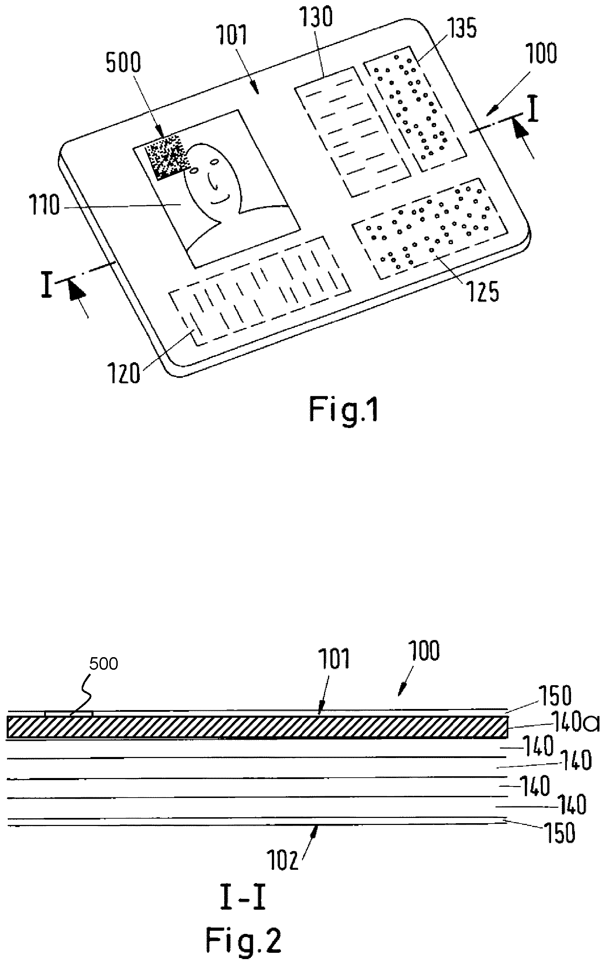

In Figur 1 ist ein mit einem Reflexionshologramm 500 versehenes Wert- oder Sicherheitsprodukt 100 gezeigt. Das Wert- oder Sicherheitsdokument 100 kann ein Personaldokument, wie ein Reisepass, ein Personalausweis, ein Zugangsausweis oder dergleichen, eine Scheckkarte oder eine Banknote oder noch ein anderes Dokument, sein. Alle nachfolgenden Beispiele werden stellvertretend für andere Dokumententypen anhand einer derartigen Karte beschrieben.

In den Figuren 1 und 2 ist das Wert- oder Sicherheitsprodukt 100 in Form einer Identitätskarte dargestellt, die beispielsweise zu einem Grundkörper in Form eines Laminats aus mehreren innenliegenden Polymerlagen 140 zusammengefügt worden ist. Beispielsweise können die Polymerlagen aus PC und/oder PET bestehen. Die einzelnen Lagen können ungefüllt oder mit Füllstoffen gefüllt sein. In letzterem Falle sind sie opak, ansonsten transparent. Die Lagen können vorzugsweise derart miteinander verbunden sein, dass sie einen monolithischen Block bilden, der praktisch nicht gespalten werden kann.

In Figur 2 sind nur zur Veranschaulichung die vor dem Laminieren noch vereinzelten Lagen sichtbar dargestellt. Im fertigen Laminat sind die Grenzflächen nicht mehr sichtbar. Die äußeren Schichten 150 der Karte können als eine abschließende Kunststoff-Schutzfolie gebildet sein oder aus einem Schutzlack bestehen, der nach dem Laminieren auf die Karte aufgetragen worden ist. Die Kunststoff-Schutzfolie bzw. der Schutzlack ist transparent, sodass darunter liegende Informationen von außen sichtbar sind. Insbesondere bleiben dabei aber eine oder mehreren Druckschichten 140a bspw. eines Portraitbilds 110 sichtbar, die vorzugsweise unmittelbar neben oder hinter der äußeren Schicht 150 angeordnet ist bzw. angeordnet sind.

Das Wert- oder Sicherheitsprodukt 100 weist eine Oberseite 101 und eine Unterseite 102 auf. Auf der Oberseite 101 befinden sich das Gesichts- oder Portraitbild 110 des Inhabers der Karte sowie vier Datenfelder, nämlich ein erstes Datenfeld 120, ein zweites Datenfeld 130 mit Karten- und Inhaberdaten in Klarschrift sowie ein drittes Datenfeld 125 und ein viertes Datenfeld 135 mit den Karten- und Inhaberdaten in Blindenschrift, beispielsweise Braille-Schrift. Das dritte Datenfeld gibt die Daten des ersten Datenfeldes 120 in der Blindenschrift an, und das vierte Datenfeld 135 gibt die Daten des zweiten Datenfeldes 130 ebenfalls in der Blindenschrift an. Die Daten im ersten und im zweiten Datenfeld 120, 130 sind durch Druckschichten hergestellt, die auf einer äußeren Lage des Dokuments, aber unmittelbar unter der außenliegenden Schutzschicht 150, liegen.

Es ist anhand von Figur 1 ist wiederum zu erkennen, dass das Wert- oder Sicherheitsprodukt 100 außerdem ein Reflexionshologramm 500 aufweist, welches in kodierter Form vorliegt und damit maschinenlesbar ist. Dieses Reflexionshologramm 500 ist in einer ersten Variante auf eine der (Zwischen-) Schichten 140 aufgebracht. Es kann also vor dem Laminieren des in Figur 2 gezeigten Verbunds angebracht werden, oder in einer zweiten Variante erst anschließend auf eine der außenliegenden Schichten 150. Das maschinenlesbare Reflexionshologramm 500 ist ausgebildet, ausschließlich bei einer Rekonstruktionswellenlänge oder bei einem Rekonstruktionswellenlängenbereich zu rekonstruieren, die aus dem Spektrum des für das menschliche Auge nicht-sichtbaren Lichts ausgewählt sind. Das Reflexionshologramm 500 ist folglich - in unbeleuchtetem Zustand - für das menschliche Auge nicht sichtbar. Vorzugsweise ist das Reflexionshologramm 500 ausgebildet, bei einer Wellenlänge oder auch bei mehreren Wellenlängen aus dem Bereich des Infrarots, insbesondere des Nahinfrarots, mithin also in einem Wellenlängenbereich von 780 Nanometern bis zu 3000 Nanometern, zu rekonstruieren. Zur Erzeugung und/oder zur Rekonstruktion kann beispielsweise ein optisch gepumpter Halbleiterlaser Verwendung finden, welcher ausgebildet ist, im Dauerstrich kohärente Lichtwellen mit einer konstanten Intensität, beispielsweise unter Einsatz mindestens einer Hochleistungs-Laserdiode mit einer Wellenlänge des Infrarots, beispielsweise mit einer Wellenlänge von 850 Nanometern oder einer Wellenlänge von 940 Nanometern zu emittieren. Es besteht alternativ die Möglichkeit, dass das Reflexionshologramm 500 bei einer Wellenlänge des Ultraviolett rekonstruiert, wobei dann der Einsatz einer Hochleistungs-Laserdiode mit einer Wellenlänge von 355 Nanometern in Betracht kommt.

Das für das menschliche Auge nicht-sichtbare Reflexionshologramm 500 kann in ein weiteres für das menschliche Auge sichtbares Hologramm, oder - wie in Figur 1 beispielhaft gezeigt - in das Portraitbild 110 eingebettet sein. Wenn das Reflexionshologramm 500, welches vorliegend als ein Denisjuk-Hologramm, mithin also als ein Volumenreflexionshologramm gebildet ist, durch Beleuchtung mit einer geeigneten Rekonstruktionswellenlänge unter einem vorgegebenen Einfallswinkel rekonstruiert wird, kann die Kodierung des Reflexionshologramms 500 erfasst werden. Der Code liegt dabei vorzugsweise in Form eines DataMatrix-Codes vor, der einen zweidimensionalen Barcode darstellt, in welchem personen- und/oder dokumentenspezifische Informationen hinterlegt sein können. Vorzugsweise sind diese Informationen relevant für die Sicherheit des Wert- oder Sicherheitsprodukts 100.

Beispielsweise kann in dem Reflexionshologramm 500 eine Information verborgen sein, die einer auf dem Wert- oder Sicherheitsprodukt 100 ebenfalls vorhandenen Referenzinformation entspricht. Ein Abgleich der im Reflexionshologramm 500 hinterlegten Information mit der Referenzinformation lässt schnell auf eine Manipulation oder auf eine Fälschung des Wert- oder Sicherheitsprodukts 100 schließen.

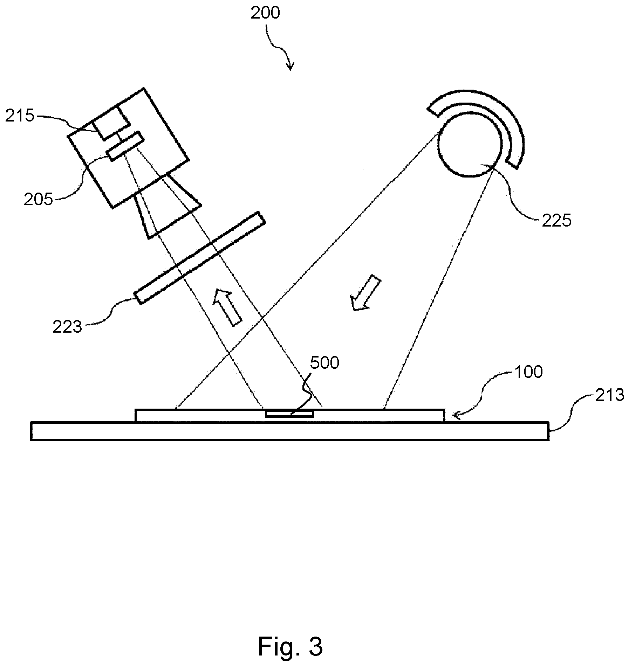

Figur 3 zeigt eine schematische Darstellung einer Vorrichtung 200 zur Rekonstruktion und Erfassung des Reflexionshologramms 500 des Wert- oder Sicherheitsprodukts 100. Die Vorrichtung 200 umfasst einen Bildsensor 205, eine Beleuchtungseinrichtung mit einer Lichtquelle 225, eine Halterung 213 für das Wert- oder Sicherheitsprodukt 100, einen Prozessor 215, der mit dem Bildsensor 205 in einer Kommunikationsverbindung steht. Die Lichtquelle 225 ist ausgebildet, Licht aus einem für das menschliche Auge nicht-sichtbaren Wellenlängenbereichs, insbesondere im Nahinfrarotbereich auszusenden und das sich in der Halterung 213 befindliche Wert- oder Sicherheitsprodukt 100 aus einer ersten Richtung zu derart zu bestrahlen, dass das Reflexionshologramm 500 rekonstruiert. Das NIR-Licht wird durch das Wert- oder Sicherheitsprodukt 100 in Richtung des für NIR-Licht sensitiven Bildsensors 205 reflektiert, wobei das detektierte Bild vom Prozessor 215 verarbeitet wird. Dieser Prozessor 215 kann ausgebildet sein, den Code des Reflexionshologramms 500 zu entschlüsseln und mit sicherheitsrelevanten Informationen des Wert- oder Sicherheitsprodukts 100, insbesondere mit weiteren auf diesem angebrachten oder hinterlegten Referenzinformationen zu vergleichen. Vorliegend umfasst die Vorrichtung 200 zusätzlich einen optischen Filter 223, um das auf den Sensor einfallende Licht zuvor zu filtern oder spektral zu formen. Der optische Filter 223 kann beispielsweise im Strahlengang zwischen dem Wert- der Sicherheitsprodukt 100 und dem Bildsensor 105 angeordnet sein. Der optische Filter 223 ist vorliegend ein nahinfrarotdurchlässiger Filter, welcher sichtbares Licht, UV-Licht, und/oder Mittel- und Ferninfrarotlicht aus dem Strahlengang herausfiltert, so dass lediglich die Informationen aus dem Reflexionshologramm 500 vom Bildsensor 205 zu erfassen bzw. vom Prozessor 251 zu verarbeiten sind.

Insgesamt zeichnet sich die vorliegende Erfindung durch eine Kombination aus der Sicherung mittels eines Codes und einem holografischen Sicherheitsmerkmal aus. Dies führt zu einer verbesserten Absicherung des Wert- oder Sicherheitsprodukts 100 gegen Fälschungen.

### BEZUGSZEICHENLISTE

- 100: Wert- oder Sicherheitsprodukt
- 101: obere Substratoberfläche, obere Kartenoberfläche, Oberseite
- 102: untere Substratoberfläche, untere Kartenoberfläche, Unterseite
- 110: Gesichtsbild
- 120: erstes Datenfeld
- 125: drittes Datenfeld
- 130: zweites Datenfeld
- 135: viertes Datenfeld
- 140: innenliegende Polymerlagen
- 140a: Druckschicht
- 150: äußere Schutzschicht
- 200: Vorrichtung
- 205: Bildsensor
- 213: Halterung
- 215: Prozessor
- 223: optischer Filter
- 225: Lichtquelle
- 500: Reflexionshologramm (maschinenlesbar)

## Patentansprüche

1. Wert- oder Sicherheitsprodukt (100), mit einem Grundkörper auf den ein Reflexionshologramm (500) aufgebracht oder in den das Reflexionshologramm eingebracht ist, **dadurch gekennzeichnet, dass** das maschinenlesbare Reflexionshologramm (500) ausgebildet ist, ausschließlich bei einer Rekonstruktionswellenlänge oder bei einem Rekonstruktionswellenlängenbereich zu rekonstruieren, die aus dem Spektrum des für das menschliche Auge nicht-sichtbaren Lichts ausgewählt sind.

2. Wert- oder Sicherheitsprodukt (100) nach Anspruch 1, **dadurch gekennzeichnet, dass** das Reflexionshologramm ausgebildet ist, bei Wellenlängen oder in einem Wellenlängenbereich des Infrarots zu rekonstruieren.

3. Wert- oder Sicherheitsprodukt (100) nach Anspruch 2, **dadurch gekennzeichnet, dass** das Reflexionshologramm ausgebildet ist, bei Wellenlängen oder in einem Wellenlängenbereich des Nahinfrarots zu rekonstruieren.

4. Wert- oder Sicherheitsprodukt (100) nach Anspruch 1, **dadurch gekennzeichnet, dass** das Reflexionshologramm ausgebildet ist, bei Wellenlängen oder in einem Wellenlängenbereich des Ultravioletts zu rekonstruieren.

5. Wert- oder Sicherheitsprodukt (100) nach einem der Ansprüche 1 bis 4, **dadurch gekennzeichnet, dass** das maschinenlesbare Reflexionshologramm kodiert ist.

6. Wert- oder Sicherheitsprodukt (100) nach Anspruch 5, **dadurch gekennzeichnet, dass** das maschinenlesbare Reflexionshologramm als ein DataMatrix-Code gebildet ist.

7. Wert- oder Sicherheitsprodukt (100) nach Anspruch 5 oder 6, **dadurch gekennzeichnet, dass** das kodierte Reflexionshologramm in ein für das menschliche Auge sichtbares Hologramm integriert ist.

8. Wert- oder Sicherheitsprodukt (100) nach einem der Ansprüche 5 bis 7, **dadurch gekennzeichnet, dass** das kodierte Reflexionshologramm in ein Portraitbild (110) eingebettet ist.

9. Wert- oder Sicherheitsprodukt (100) nach einem der Ansprüche 5 bis 8, **dadurch gekennzeichnet, dass** im kodierten Reflexionshologramm eine Information verborgen ist, die einer ebenfalls vorhandenen Referenzinformation entspricht.

10. Verfahren zur Herstellung eines Wert- oder Sicherheitsprodukts (100) nach einem der Ansprüche 1 bis 9, **gekennzeichnet durch** die Schritte:
A) Belichten eines holografischen Films durch Bestrahlen mit kohärentem Licht, dessen Wellenlänge oder dessen Wellenlängenbereich ausgewählt ist aus dem Spektrum des für das menschliche Auge nicht-sichtbaren Lichts und Erzeugen eines maschinenlesbaren Reflexionshologramms,
B) Entwickeln des holografischen Films zur Fixierung des Reflexionshologramms, und
C) Aufbringen oder Einbringen eines das Reflexionshologramm umfassenden Abschnitts des holografischen Films auf oder in eine Schicht oder auf oder in ein Trägermaterial eines Rohlings eines Wert- oder Sicherheitsprodukts (100) oder in ein im Wert- oder Sicherheitsprodukt (100) ausgebildetes Fenster.

11. Verfahren nach Anspruch 10, **dadurch gekennzeichnet, dass** das maschinenlesbare Reflexionshologramm (500) beim Belichten einen Code, insbesondere einen DataMatrix-Code ausbildet.

12. Verfahren nach Anspruch 10 oder 11, **dadurch gekennzeichnet, dass** das Reflexionshologramm (500) bei Wellenlängen oder in einem Wellenlängenbereich des Nahinfrarots rekonstruiert.

13. Verfahren nach einem der Ansprüche 10 bis 12, **dadurch gekennzeichnet, dass** das kodierte Reflexionshologramm im Schritt C) in ein für das menschliche Auge sichtbares Hologramm integriert wird.

14. Verfahren nach einem der Ansprüche 10 bis 13, **dadurch gekennzeichnet, dass** das kodierte Reflexionshologramm im Schritt C) in ein Portraitbild (110) des Wert- oder Sicherheitsprodukt (100) eingebettet wird.

15. Vorrichtung (200) zur Rekonstruktion und Erfassung eines Reflexionshologramms (500) eines Wert- oder Sicherheitsprodukts (100) nach einem der Ansprüche 1 bis 9, umfassend:
- eine Halterung (213), die ausgebildet ist, das Wert- oder Sicherheitsprodukt (100) aufzunehmen,
- eine Lichtquelle (225), die Licht zumindest mit einer Rekonstruktionswellenlänge oder aus einem Rekonstruktionswellenbereich emittiert, die aus dem Spektrum des für das menschliche Auge nicht-sichtbaren Lichts ausgewählt sind, wobei die Lichtquelle (225) ausgebildet ist, das in der Halterung (213) befindliche Wert- oder Sicherheitsprodukt (100) aus einer ersten Richtung zu beleuchten, und
- einen für Licht mit der Rekonstruktionswellenlänge oder aus dem Rekonstruktionswellenbereich sensitiven Bildsensor (205), der ausgestaltet ist, vom Reflexionshologramm (500) reflektiertes Licht aus einer zweiten Richtung zu erfassen.
